# EUROPEAN PATENT APPLICATION

(11) **EP 3 214 570 A1**
(43) Date of publication of application: **06.09.2017**
(21) Application number: 16158707.6
(22) Date of filing: 04.03.2016
(51) Int. Cl.: G06F 21/60

(54) **METHOD AND DEVICE FOR DELEGATING ACCESS RIGHTS**

(71) Applicant: Axis AB, 223 69 Lund (SE)
(72) Inventor: SELINDER, Emil, SE-226 57 Lund (SE); JOHANSSON, Marcus, SE-226 48 Lund (SE); ROSENGREN, Robert, SE-224 72 Lund (SE); ADOLFSSON, Johan, SE-247 34 Södra Sandby (SE); HANTOFT, Pia, SE-212 36 Malmö (SE); BORCEA, Julius, SE-226 49 Lund (SE); LARSSON, Ingemar, SE-211 27 Malmö (SE); VADING, Einar, SE-241 61 Löberöd (SE)
(74) Representative: Awapatent AB

(57) **Abstract**

There is provided a method and a device for delegating access rights in a system which is configured to handle access rights of users to resources in the system. The method comprises assigning (S02) a first access right to a first user; appointing (S04) a pool of one or more users serving as deputies for the first user; checking (S06) if the first user, during a predefined period of time, has refrained from performing a predefined activity with respect to the resources; and if so, delegating (S08) the first access right to a user in the pool.

## Description

### Technical field

The present invention relates to the field of management of access rights. In particular it relates to a method and a device for delegating access rights in a system which is configured to handle access rights of users to system resources.

### Background

Access systems in which users may be granted or denied access to different resources have become increasingly popular. For example, a user may be given the right to enter a specific area, log-in on a computer, access a file in a computer system, make changes in a software system, etc. In this way, the users' access to property as well as to sensitive information may be controlled.

Access rights in such systems are typically distributed permanently and beforehand. With such a distribution scheme, a problem may occur if a specific right is assigned to only one person. That person then becomes a single point of failure, should he or she be unavailable. This problem is further discussed in US 2012/0304306 A1 which proposes that a user may assign temporary ownership of a document to another user when going on leave.

The approach described in US 2012/0304306 A1 requires that a user manually delegates an access right. Moreover, the proposed approach requires that the access right is delegated beforehand. Thus, if a person suddenly becomes ill or does not turn up at the office for some reason, the approach of US 2012/0304306 A1 may fail. There is thus room for improvements.

### Summary of the invention

In view of the above, it is thus an object of the present invention to provide an improved method and device for delegating access rights. In particular, it is an object to provide a method and a device which allows an access right of a user to be automatically delegated upon absence of the user.

According to a first aspect of the invention, the above object is achieved by a method for delegating access rights in a system configured to handle access rights of users to resources in the system. The method comprises:
assigning a first access right to a first user;
appointing a pool of one or more users serving as deputies for the first user;
checking if the first user, during a predefined period of time, has refrained from performing a predefined activity with respect to the resources; and if so,
delegating the first access right to a user in the pool.

According to the above method, a pool, i.e. a group, of one or more users is appointed to a first user. The users in the pool serve as deputies for the first user. In other words, the pool serves as a fallback group for the first user.

The idea of the invention is generally to automatically detect if the first user is absent, and to delegate an access right of the first user to a user in the pool if the first user is detected to be absent. It has been realized that it is possible to detect whether a user is absent or not by checking the user's activity, or rather lack of activity, with respect to the resources of the system. For example, an absent user has typically not tried to enter a building or tried to log-in to a computer. Based on this realization, it is proposed to check whether the first user, during a predefined period of time, has refrained from performing a predefined activity with respect to the resources of the system. If so, the first user is considered to be absent. The predefined activity with respect to the resources of the system may e.g. be logging in to a computer, requesting access to enter a room, requesting access to a file or a storage unit, using a machine or a tool, or triggering a presence signal. With this arrangement, one may thus automatically check whether the first user is absent, and delegate an access right of the user to a deputy user in the pool in response thereto.

A user, as used herein, typically refers to a person. However, it may also refer to other entities, such as a machine or a software program.

An access right, as used herein, includes both physical access rights, such as rights to enter a specific area, and logical access rights, such as rights to access a certain file or make changes in a software system.

By delegating an access right from a first user to a second user is generally meant that the second user is given the access right. However, this does not exclude that the first user, after the access right has been delegated to the second user, also holds the access right. Thus, both the first and the second user may, after delegation, be in possession of the access right. In some embodiments, however, only the second user is in possession of the access right after the delegation.

The above-disclosed method is intended to be used in a system having a plurality of resources. Common for the resources is that they are connected to the system, such that activities with respect to the resources may be detected. The resources may e.g. be physical areas, such as rooms, computers, computer files, storage units, machines, and tools. The resources may further include motion sensors, light sensors, sound sensors etc. Access rights may be issued with respect to some of the resources. However, this need not be the case for other resources. For example, the motion sensors, light sensors, and/or sound sensors are examples of resources which typically are not subject to issuance of access rights.

The first user may be associated with several access rights. For this purpose, the method may further comprise assigning a second access right to the first user, wherein the step of delegating comprises delegating the first and second access rights to different users in the pool. Different access rights may thus be delegated to different persons. This is advantageous in that it offers a higher security level, and it also distributes the workload connected to the access rights to more than one user.

In order to allow for a greater flexibility, and in order to further distribute the workload connected to an access right, the method may further comprise delegating the first access right to several users in the pool. In this way, the workload connected to the first access right may be shared by several users in the pool.

The delegation of an access right may be permanent. However, typically, the delegation of access rights to users in the pool is temporary. For instance, the delegated access right may have a predefined duration. Alternatively, the duration of the delegated access right may be terminated once the first person is detected to be present again. For example, the delegated access right may be cancelled when the first user performs a certain activity with respect to the resources, thereby indicating that the first person is present again.

There may further be groups of access rights. A group of access rights may be associated with a role. For example, the first person may be associated with a role, such as being a project leader, and thereby being associated with a group of access rights. A project leader may for instance have a first access right to a project office area, a second access right to a developer office area, a third access right to a project computer file, and a fourth access right to an accounting computer file. When the first person is absent, his/her role or the group of access rights associated with the role may be delegated to a user in the pool. More particularly, the method may further comprise assigning a group of access rights, including the first access right, to the first user, wherein the step of delegating comprises delegating the group of access rights to a user in the pool. In this way, the access rights may be delegated as a group rather than in a one-by-one fashion.

In case the pool comprises a plurality of users, the step of delegating may comprise selecting a user from the pool. In this way, the method allows for a greater flexibility.

The users in the pool may further be associated with an order of priority, and wherein a user is selected from the pool in accordance with descending order of priority. As an example, the pool may be in the form of a list of users being associated with the first user. The list may be ordered in accordance with the descending priority of the users. When the first access right is to be delegated, the user with the highest priority may be selected, i.e. the user which is first on the list.

However, there may be situations where it is inappropriate to select the user with highest priority. This may for instance be the case if also the user with highest priority is absent. It may also be the case that the user with highest priority has refrained from using the first access right for a certain period of time. For this purpose, the step of selecting may further comprise checking if a user in the pool, which is associated with the highest priority in the descending order of priority, has refrained from performing a certain activity with respect to the resources within a predefined period of time, and if so, selecting a user in the pool which is associated with a priority being next to the highest priority in the descending order of priority. These steps may be iterated until a user which is not absent is found, or until someone has used the first access right.

According to the above, a user may be selected from the pool according to an order of priority. Additionally, or alternatively, a user may be selected based on activities with respect to the resources performed by users in the pool. In this way, the selection of the user becomes dynamic. For example, a user in the pool that first performed a certain activity with respect to the resources may be selected. In this way, the user in the pool that first needed access to the resource associated with the first access right, or the user in the pool that first arrived at the office may be selected.

Suppose that the first access right was delegated to a second user which is a member of the pool. It may happen that also the second user is absent. According to the above, the first access right may in such situation be delegated to another user in the pool. However, according to a further embodiment, the first access right may instead be re-delegated to a user which is a member of a further pool serving as a fallback group for the second user. In other words, the method may further comprise: appointing a further pool of one or more users serving as deputies for a second user, the second user being the user in the pool to which the first access right is delegated; checking if the second user, during a predefined period of time, has refrained from performing a predefined activity with respect to the resources; and if so, re-delegating the first access right to a user in the further pool.

The steps of checking and delegating may be carried out continuously. In such embodiments, as soon as it is discovered that the first user, during a predefined period of time has refrained from performing a predefined activity with respect to the resources, the first access right is delegated to a user in the pool. This is advantageous in that the delegation of access rights is always updated.

In other embodiments, the steps of checking and delegating are triggered by a user in the pool performing an activity with respect to the resources. For example, the steps of checking and delegating may be triggered by a user in the pool requesting access to a resource, such as the resource being associated with the first access right. This is advantageous in that the method becomes computationally efficient. Moreover, the first access right is only delegated if there is a need for it being delegated.

According to a second aspect of the invention, the above object is achieved by a computer program product comprising a computer-readable medium with computer code instructions for carrying out the method according to the first aspect.

According to a third aspect of the invention, there is provided a device for delegating access rights in a system configured to handle access rights of users to resources in the system, comprising:
an assignment component configured to assign a first access right to a first user;
a pool appointing component configured to appoint a pool of one or more users serving as deputies for the first user;
a delegating component configured to check if the first user, during a predefined period of time, has refrained from performing a predefined activity with respect to the resources; and if so,
delegate the first access right to a user in the pool.

The second and third aspects may generally have the same features and advantages as the first aspect. It is further noted that the invention relates to all possible combinations of features unless explicitly stated otherwise.

### Brief Description of the Drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figs 1 and 2 illustrate systems in which embodiments of the present invention may be implemented.
Fig. 3 is a schematic illustration of a device according to embodiments, and information which may stored in the systems of Figs 1 and 2.
Fig. 4 illustrates a portion of a user and access rights record.
Fig. 5 is a flow chart of a method for delegation of access rights according to embodiments.

### Detailed description of embodiments

The present invention will now be described more fully hereinafter with reference to the accompanying drawings, in which currently preferred embodiments of the invention are shown. The systems and devices disclosed herein will be described during operation.

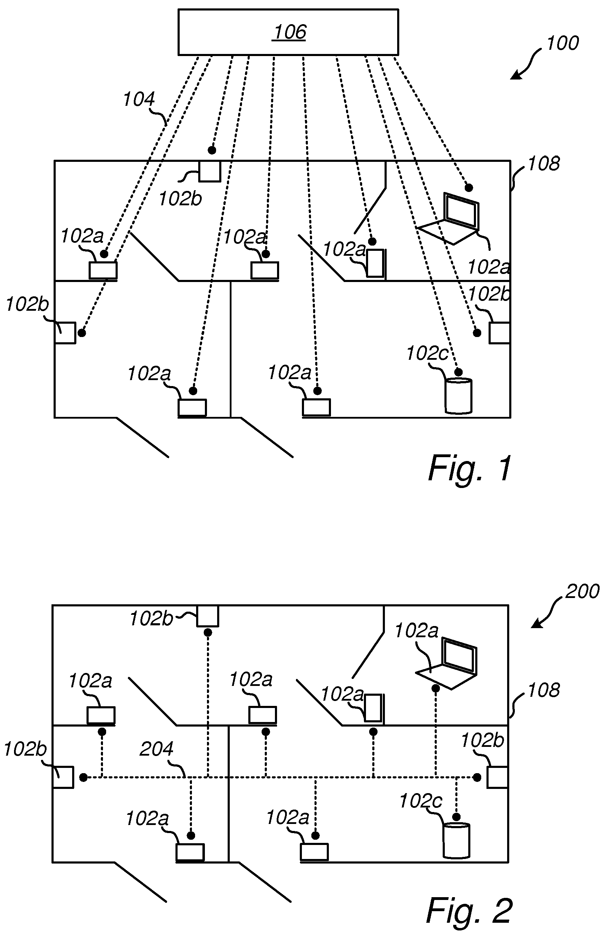

Fig. 1 illustrates a system 100 in which embodiments of the present invention may be implemented. The illustrated system 100 is installed in a building 108. The system 100 comprises resources 102a, 102b, 102c and a server 106. The resources 102a, 102b, 102c, may comprise physical resources 102a, 102b, and logical resources 102c. The physical resources may comprise resources 102a to which a user may be assigned the right to access. Here, such physical resources 102a are illustrated by doors to different areas of a building, and computers. However, the physical resources 102a may also include other things, such as any type of tools or machines. The physical resources may also comprise resources 102b which are configured to generate a signal if a user is present. For example, the physical resources 102b may be different types of sensors, such as motion sensors, light sensors, sound sensors, and cameras, which may sense the presence of a user and generating a signal in response thereto. The logical resources 102c, may comprise computer files, software systems and storage units, including databases. The logical resources 102c are also resources to which a user typically may be assigned the right to access.

The resources 102a, 102b, 102c are further arranged for communication with the server 106 over a network 104, which preferably is a wireless network, such as a wireless network based on the internet protocol. For this purpose, at least some of the resources (typically those that usually are not provided with a network interface) may each be provided with a controller which connects the resource to the network 104. The controller may be further arranged to control its respective resource 102a, 102b, 102c. For example, in case the resource is a door, the controller may be arranged to control the opening of the door. In case the resource is a machine, the controller may be arranged to control the starting of the machine.

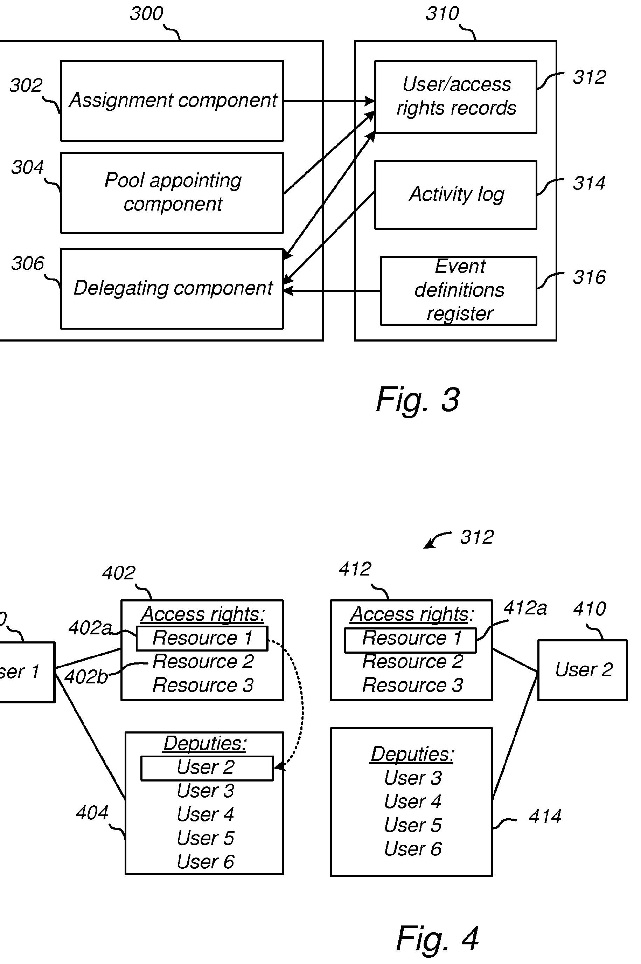

The system 100, and in particular the server 106, is configured to handle access rights of users. For this purpose the server 106 keeps a record of users and access rights of the users to the resources 102a, 102b, 102c. The record of users and access rights will be described later on in conjunction with Fig. 3. As a user wants to gain access to one of the resources, the user presents credentials for access. This may e.g. be done using biometrics, such as face recognition or fingerprint recognition, by reading an access card at a terminal associated with the resource, or by logging-in on a computer. In response thereto, the server 106 may consult the record of users and access rights and check whether the user has right to access the particular resource. If the user has right to access the resource, the system 100 will give the user access to the resource.

Generally, a user may perform activities with respect to the resources 102a, 102b, 102c. At least some of the resources 102a, 102b, 102c, may be provided with an interface via which a user may interact with the resource 102a, 102b, 102c. Typically, the interface is configured to receive an access credential of the user. Examples of such interfaces are a card reader at which a user may present an access card, a biometric reader at which a user may provide biometric data, and a computer interface at which a user may provide log-in details. A user may thus perform activities with respect to the resources 102a, 102b, 102c via the interfaces, by e.g. presenting an access card, providing biometric data, logging-in to a computer, requesting access to a machine or tool, or requesting access to a computer file or a storage. Another example of a user performing an activity with respect to the resources is that a user may trigger a presence signal of a physical resource 102b, such as triggering a motion sensor, a light sensor, a sound sensor, or a camera. In such cases, the user may be identified by reading a tag or by performing a face recognition using a surveillance camera. The position of the sensor or camera may also be indicative of the identity of the user, for example if the sensor or camera is located in an office of the user.

The system 100 may further be configured to log activities performed with respect to the resources 102a, 102b, 102c. For this purpose, the server 106 may keep an activity log file to be described in conjunction with Fig. 3. As an activity is registered at a resource 102a, 102b, 102c, information regarding the activity is transmitted to the server 106 over the network 104 and is stored in the server 106. For example, the system 100 may log information regarding the resource with respect to which the activity was performed, an identification of the user performing the activity, and the time at which the activity was performed. The system 100 may also log the type of activity that was carried out, such as presenting an access card, providing biometric data, requesting access to a file, or logging- in on a computer.

Fig. 2 illustrates a system 200 in which embodiments of the present invention may be implemented. The system 200 differs from the system 100 in that it has a distributed design. More specifically, the system 200 does not comprise a server 106. Instead, the functionality of the server 106 in Fig. 1, such as storing data relating to access rights and activities of users, and making decisions regarding access rights, is distributed among the controllers or resources 102a, 102b, 102c, when applicable. For this purpose, the resources 102a, 102b, 102c are configured to communicate with each other over a network, e.g. via the controllers described above.

Fig. 3 illustrates a device 300 for delegating access rights according to embodiments. The device 300 may be used in systems which are configured to handle access rights of users to resources, such as systems 100 and 200 described above. For example, the device 300 may be comprised in the server 106 of the system 100, or may be distributed between the controllers/resources in the system 200. The device 300 comprises an assignment component 302, a pool appointing component 304, and a delegating component 306.

Fig. 3 further illustrates information 310 which is stored in the system 100 or 200, and which the device 300 may access. This includes information regarding users and access rights 312 (the user and access rights record), information regarding activities of the users with respect to the resources 314 (the activity log), and information regarding different events 316 which e.g. may be used to deduce whether a user is absent or not. The information 310 may e.g. be stored in the server 106 of system 100 or in the controllers in the system 200.

The device 300 may generally be implemented in hardware or in software or as a combination thereof. In particular, the device 300 may comprise a processor, and a (non-transitory) computer-readable medium having computer code instructions stored thereon. The computer code instructions, when executed by the processor, are adapted to carry out any method described herein.

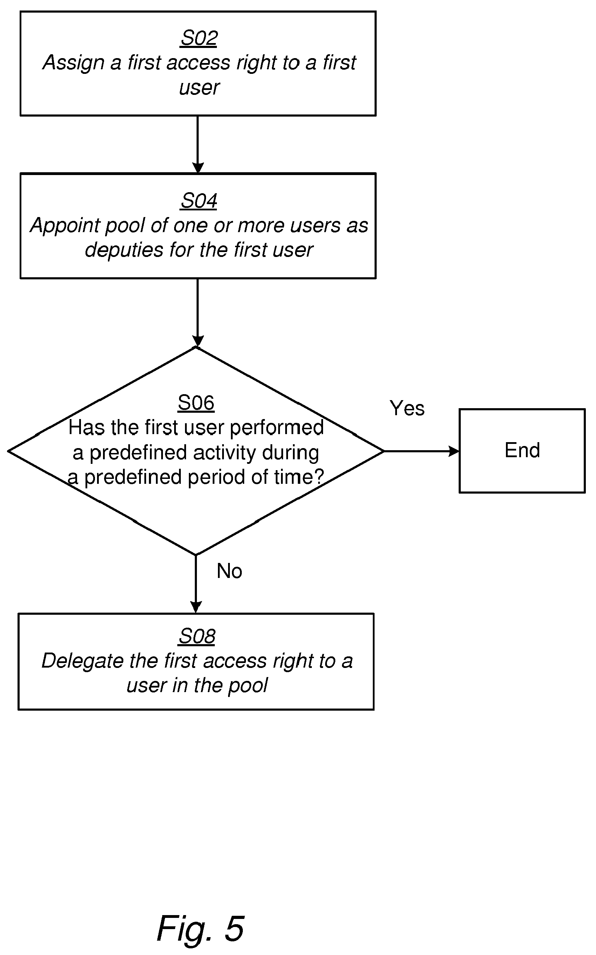

The operation of the device 300 will now be described with reference to Figs 1-4 and the flowchart of Fig. 5.

In step S02 the assignment component 302 assigns a first access right to a first user. The first access right is with respect to one of the resources 102a, 102c. The assignment component 302 may receive a user input which indicates the first user and the resource 102a, 102c to which the first user should be given access. The assignment component 302 then assigns the first access right to the first user in the user and access rights record 312.

Fig. 4 schematically illustrates a portion of the user and access rights record concerning a first user 400, and a second user 410. The first user 400 is associated with a number of access rights 402. In step S02, the first user 400 is assigned a first access right 402a, in this case to a first resource labelled "Resource 1".

In step S04, the pool appointing component 304 appoints a pool of one or more users as deputies for the first user 400. For this purpose, the pool appointing component 304 may receive a user input which indicates which users are to serve as deputies for the first user 400. The assignment component 302 then associates the first user 400 in the user and access rights record 312 with a pool of deputies 404. In the illustrated example, the pool of deputies 404 comprises user 2, user 3, user 4, user 5, and user 6.

In the user and access rights record 312, the pool of deputies 404 may be in the form of a list. The list may be ordered in the sense that different users on the list may have different priorities. When appointing the pool of deputies 404, the pool appointing component 304 may therefore assign different priorities to the users in the pool. The priorities may be indicated to the pool appointing component 304 via a user input. In the illustrated example, the pool of deputies is ordered in descending order of priority. Thus user 2 has the highest priority, followed by user 3, user 4, user 5, and user 6.

In step S06, the delegating component 306, checks whether or not the first user 400 has performed a predefined activity with respect to the resources 102a, 102b, 102c during a predefined period of time. For this purpose, the delegating component 306 may consult the activity log 314, and the event definitions register 316.

The activity log 314 stores information regarding all activities with respect to the resources 102a, 102b, 102c that were carried out by users of the system 100, 200. In particular, the activity log 314 stores information regarding all activities with respect to the resources 102, 102b, 102c that were carried out by the first user 400. The activity log 314 typically stores information regarding which resource the activity concerned, the user who performed the activity, if available, and the time point at which the activity was performed. Examples of information stored in the activity log 314 are "user 1 presented his access card at door 1 at 8am", "user 1 recognized at surveillance camera 3 at 8.10 am", "motion sensor 2 located in the office of user 1 was triggered at 8.15" "user 1 logged-in on computer 1 at 8.30am", "user 1 requested computer file 4 at 8.45 am".

The event definitions register 316 sets up rules which define different events regarding activities with respect to the resources 102a, 102b, 102c. In other words, the event definitions register 315 is a register of predefined events. Typically, the events are defined to be indicative of the presence of a user. The event definitions register 316 may be set up during configuration of the system 100 or 200.

Each event is composed of an activity with respect to a resource 102a, 102b, 102c, and a time period. In more detail, the event specifies that the activity should be carried out within the time period. Examples of events are "door 1 activated between 6 am and 10 am", "any door activated between 6 am and 10am", "door 3 activated during the last three hours", "log-in on computer 1 before 10am", "log-in on any computer before 10am", "log-in on any computer during the last 5 hours", "trigger motion sensor during the last 3 hours", "request of computer file between 3am and 10am", etc.

An event may also be a combination of different events such as a combination of an event A and an event B, requiring that both events A and B are fulfilled. For example, an event may be "log-in on any computer during the last 5 hours" and "trigger motion sensor during the last 3 hours". Events may also be combined such that one of event A or event B should be fulfilled, For example an event may be "any door activated between 6 am and 10 am" or "log-in on any computer before 10am". It is understood that more than two events may be combined to form a chaining of events.

By consulting and comparing the activity log 314, and the event definitions register 316, the delegating component 306 may thus in step S06 check whether or not the activities of the first user 400 satisfy the predefined events. The events in the event definitions register 316 may be general in the sense that the delegating component 306 uses the same events regardless of which access right is about to be delegated. However, the delegating component 306 may also select events from the event definitions register 316 depending on which access right is about to be delegated. In other words, different access rights may be associated with different events. In particular, the first access right 402a may be associated with a particular event or chain of events. Similarly, different events in the event definitions register 316 may be associated with different users. In this way, the delegation component 306 may select different events in the event definitions register 316 depending on which user is being checked in step S06.

If the delegating component 306, in step S06, finds that the activities of the first user 400 do not satisfy the predefined event(s), meaning that the first user 400 has refrained from performing an activity defined by the event(s) during a period of time defined by the event(s), the delegating component proceeds to step S08. Otherwise the method ends.

In step S08, the delegating component 306 delegates the first access right 402a to a user in the pool of deputies 404. The first access right 402a may be delegated to more than one user in the pool 404.

In the illustrated example of Fig. 4, the delegating component 306 delegates the first access right 402a to a second user labelled by "user 2" in the pool of deputies 404. In this process the delegating component 306 may add an access right 412a corresponding to the first access right 402a to a record of access rights 412 associated with the second user 410. The access right 412a which is delegated to the second user 410 may be temporary, meaning that it is cancelled after a predefined period of time. The duration of delegated access rights may be set during configuration of the system 100 or 200. Alternatively, the delegated access right 412a may be cancelled in response to an activity of the first user 400 with respect to the resources 102a, 102b, 102c. In this way, the delegation may last until the first user is present again.

Note that after delegation of the first access right 402a, the first access right 402a may be kept in the record of access rights 402 of the first user 400. In this way, both the first user 400 and the second user 410 may have a right to access the resource associated with the first access right 402a. Alternatively, the first access right 402a may be deleted from the list of access rights 402 associated with the first user 400 after delegation.

If there is only one user in the pool 404, the delegating component 306 delegates the first access right 402a to that user. However, if there is more than one user in the pool 404, the delegating component 306 may further select a user in the pool 404 to which the first access right 402a should be delegated.

According to embodiments, and as further described above, the pool 404 may be in the form of an ordered list where different users are associated with different priorities. In such a situation, the delegating component 306 may select a user from the pool 404 in accordance with descending order of priority. Assuming that the pool 404 in the example of Fig. 4 is arranged in descending order of priority, user 2 would thus be selected.

However, it may be the case that also the user in the pool 404 having the highest order of priority is absent, or has not used the access right for a certain time period. In such case it would be advantageous to select the next user on the list. For that reason, the delegating component 306 may perform a check, similar to the check described above in connection to step S06, to see if the user being associated with the highest priority on the list is absent, or has not used the access right for a certain time period, as the case may be. If this is the case, the user being next on the list in the descending order of priority may be selected. It is understood that this procedure may be repeated until a user which is present has been found, or until a user has used the first access right to access a resource.

According to embodiments, the selection of a user from the pool 404 may instead be based on activities with respect to the resources performed by users in the pool 404. In particular, the delegating component 306 may select a user in the pool 404 that first performs a certain activity. Activity-based criteria for selecting a user from the pool 404 may e.g. be defined when configuring the system 100, 200 and may form part of the event definitions register 316. For example, logging in to a computer, requesting access to a room, requesting access to a file, triggering a presence signal, triggering access to a storage unit, triggering usage of a machine/tool are examples of activities that could trigger the selection of a user. In order to select a user in the pool 404, the delegating component 306 could thus consult the activity log 314 to check the activities of the users in the pool 404, and compare it to the activity-based criteria for selection a user from the pool 404.

In some embodiments, the assignment component 302 may in step S02 assign more than one access right to the first user 400. In particular, the assignment component 302 may assign a first access right 402a, and a second access right 402b to the first user 400.

The access rights 402 may further be organized in groups. A group of access rights may be associated with a role that users in the system may have. For example, a user may be a project leader, an administrator, or an office keeper. Such roles may be associated with different authorities which in turn may be reflected by their access rights.

When several access rights have been assigned to the first user 400 in step S02, several cases may occur when delegating access rights in step S08. According to one alternative, the delegating component 306 may delegate different access rights 402a, 402b to different users in the pool 404. For example, access right 402a may be delegated to user 2 and access right 402b may be delegated to user 3. In this way, security is improved since all access rights are not delegated to the same user.

According to another alternative, the delegating component 306 may delegate several access rights to the same user in the pool 404. In particular, if several access rights belong to the same group of access rights, as described above, the delegating component may delegate the group of access rights to a single user in the pool. In this way, the delegation of access rights corresponds to delegating a role to a user in the pool.

According to yet another alternative, the delegating component 306 may delegate different groups of access rights to different users in the pool 404. In this way, different roles of the first user 400 may be delegated to different users in the pool 404.

As described above, in connection to steps S02, S04, S06 and S08, a first user 400 is associated with a pool 404 of users to which access rights of the first user 400 may be delegated. In particular, the first access right 402a may be delegated to a second user 410 in the pool 404. Generally, other users in the system 100, 200 may also be associated with pools of users. Particularly, also the second user 410 may be associated with a pool 414 of users. The pool 414 of users may be appointed by the pool appointing component 304. The users in pool 414 serve as deputies for the second user 410. In other words, the pool 414 is a fallback group for the second user 410. The pool 414 may be different from the pool 404.

The delegating component 306 may delegate access rights 412 of the second user 410 to a user or to users in the fallback group 414. Similarly to what has been described above in connection to steps S06 and S08, the delegating component 306 may delegate access rights 412 upon the second user 410 not performing a predefined activity with respect to the resources 102a, 102b, 102c within a predefined period of time. This applies to access rights that were assigned to the second user 410 as well as to access rights that were delegated to the second user 410, such as the delegated first access right 412a in the example of Fig. 4. In other words, the delegating component 306 may re-delegate access rights. For example, the delegated first access right 412a may be re-delegated to user 3 in the pool 414 associated with the second user 410. Upon doing so the first access right 412a may be entered in an access right record associated with user 3. The selection of a user from the pool 414 may generally be carried out in the same manner as selection of a user from the pool 404 as further described above.

In some embodiments, the delegating component 306 performs the above steps of checking S06 and delegating S08 on its own motion. For example, the steps S06 and S08 may be performed on a continuous time basis. This may e.g. mean that the delegating component 306 periodically performs the checking of S06, and if found necessary, the delegating of step S08.

In other embodiments, the delegating component 306 is triggered to perform steps S06 and S08 by a user in the pool 404 performing an activity with respect to the resources 102a, 102b, 102c. For example, when a user in the pool 404 tries to access a resource associated with the first access right 402a, the delegating component 306 may perform the checking of step S06, and, depending on the outcome of the check, the delegating of step S08. During the delegating step S08 the first access right 402a may be delegated to the person that tried to access the resource, or to another user in the pool 404, as further described above.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method for delegating access rights in a system (100, 200) configured to handle access rights of users to resources (102a, 102b, 102c) in the system, comprising:
assigning (S02) a first access right (402a) to a first user (400);
appointing (S04) a pool of one or more users (404) serving as deputies for the first user (400);
checking (S06) if the first user (400), during a predefined period of time, has refrained from performing a predefined activity with respect to the resources; and if so,
delegating (S08) the first access right (402a) to a user in the pool (404).

2. The method of any one of the preceding claims, further comprising assigning a second access right (402b) to the first user (400), wherein the step of delegating (S08) comprises delegating the first and second access rights (402a, 402b) to different users in the pool (404).

3. The method of any one of the preceding claims, further comprising:
delegating the first access right (402a) to several users in the pool (404).

4. The method of any one of the preceding claims, wherein delegation of access rights to users in the pool is temporary.

5. The method of any one of the preceding claims, further comprising assigning a group of access rights, including the first access right (402a), to the first user (400), wherein the step of delegating (S08) comprises delegating the group of access rights to a user in the pool (404).

6. The method according to any one of the preceding claims, wherein the pool (404) comprises a plurality of users, and the step of delegating (S08) comprises selecting a user from the pool (404).

7. The method of claim 6, wherein the users in the pool (404) are associated with an order of priority, and wherein a user is selected from the pool (404) in accordance with descending order of priority.

8. The method of claim 7, wherein the step of selecting further comprises:
checking if a user in the pool (404), which is associated with the highest priority in the descending order of priority, has refrained from performing a certain activity with respect to the resources (102a, 102b, 102c) within a predefined period of time, and if so
selecting a user in the pool (404) which is associated with a priority being next to the highest priority in the descending order of priority.

9. The method of claim 6, wherein a user is selected from the pool (404) based on activities with respect to the resources (102a, 102b, 102c) performed by users in the pool (404).

10. The method of claim 9, wherein a user in the pool (404) that first performed a certain activity with respect to the resources (102a, 102b, 102c) is selected.

11. The method of any one of the preceding claims, further comprising:
appointing a further pool (414) of one or more users serving as deputies for a second user (410), the second user being the user in the pool (404) to which the first access right (402a) is delegated;
checking if the second user (410), during a predefined period of time, has refrained from performing a predefined activity with respect to the resources (102a, 102b, 102c); and if so,
re-delegating the first access right (402a) to a user in the further pool (414).

12. The method of any one of the preceding claims, wherein the steps of checking and delegating are carried out continuously.

13. The method according to any one of the preceding claims, wherein the steps of checking (S06) and delegating (S08) are triggered by a user in the pool (404) performing an activity with respect to the resources (102a, 102b, 102c).

14. A computer program product comprising a computer-readable medium with computer code instructions for carrying out the method according to any one of claims 1-13.

15. A device (300) for delegating access rights in a system (100, 200) configured to handle access rights of users to resources (102a, 102b, 102c) in the system, comprising:
an assignment component (302) configured to assign a first access right (402a) to a first user (400);
a pool appointing component (304) configured to appoint a pool of one or more users (404) serving as deputies for the first user (400);
a delegating component (306) configured to check if the first user (400), during a predefined period of time, has refrained from performing a predefined activity with respect to the resources (102a, 102b, 102c); and if so,
delegate the first access right (404) to a user in the pool (404).

## Amended claims

### Amended claims in accordance with Rule 137(2) EPC.

1. A method performed in a system (100, 200) configured to handle access rights of users to resources (102a, 102b, 102c) in the system, comprising:
assigning (S02) a first access right (402a) to a first user (400);
appointing (S04) a pool of one or more users (404) serving as deputies for the first user (400);
receiving an access request to a resource associated with the first access right (402a) from a user in the pool (404); and in response thereto
checking (S06) if the first user (400), during a predefined period of time, has refrained from performing a predefined activity with respect to the resources; and if so,
delegating (S08) the first access right (402a) to a user in the pool (404), whereby a user in the pool (404) is given access to the resource associated with the first access right (402a).

2. The method of any one of the preceding claims, further comprising assigning a second access right (402b) to the first user (400), wherein the step of delegating (S08) comprises delegating the first and second access rights (402a, 402b) to different users in the pool (404).

3. The method of any one of the preceding claims, further comprising:
delegating the first access right (402a) to several users in the pool (404).

4. The method of any one of the preceding claims, wherein delegation of access rights to users in the pool is temporary.

5. The method of any one of the preceding claims, further comprising assigning a group of access rights, including the first access right (402a), to the first user (400), wherein the step of delegating (S08) comprises delegating the group of access rights to a user in the pool (404).

6. The method according to any one of the preceding claims, wherein the pool (404) comprises a plurality of users, and the step of delegating (S08) comprises selecting a user from the pool (404) to which the first access right is to be delegated.

7. The method of claim 6, wherein the users in the pool (404) are associated with an order of priority, and wherein a user is selected from the pool (404) in accordance with descending order of priority.

8. The method of claim 7, wherein the step of selecting further comprises:
checking if a user in the pool (404), which is associated with the highest priority in the descending order of priority, has refrained from performing a certain activity with respect to the resources (102a, 102b, 102c) within a predefined period of time, and if so
selecting a user in the pool (404) which is associated with a priority being next to the highest priority in the descending order of priority.

9. The method of claim 6, wherein the first access right is delegated to the user in the pool that requested access to the resource.

10. The method of claim 9, wherein the first access right is delegated to a user in the pool that first requested access to the resource.

11. The method of any one of the preceding claims, further comprising:
appointing a further pool (414) of one or more users serving as deputies for a second user (410), the second user being the user in the pool (404) to which the first access right (402a) is delegated;
checking if the second user (410), during a predefined period of time, has refrained from performing a predefined activity with respect to the resources (102a, 102b, 102c); and if so,
re-delegating the first access right (402a) to a user in the further pool (414).

12. A computer program product comprising a computer-readable medium with computer code instructions for carrying out the method according to any one of claims 1-11.

13. A system (100, 200) for handling access rights of users to resources, comprising:
resources (102a, 102b, 102c), and
a device (300) for delegating access rights to the resources;
wherein the device (300) comprises an assignment component (302) configured to assign a first access right (402a) to a first user (400); and
a pool appointing component (304) configured to appoint a pool of one or more users (404) serving as deputies for the first user (400);
wherein a resource associated with the first access right has an interface which is configured to receive an access request from a user in the pool;
wherein the device (200) further comprises a delegating component (306) configured to, in response to the access request from a user in the pool, check if the first user (400), during a predefined period of time, has refrained from performing a predefined activity with respect to the resources (102a, 102b, 102c); and if so,
delegate the first access right (404) to a user in the pool (404), whereby a user in the pool is given access to the resource associated with the first access right.
